Europäisches Patentamt

(19) European Patent Office

Office européen des brevets

(11) Veröffentlichungsnummer: **0 264 792 B1**

(12) **EUROPÄISCHE PATENTSCHRIFT**

(45) Veröffentlichungstag der Patentschrift: **10.04.91**

(21) Anmeldenummer: **87114970.4**

(22) Anmeldetag: **13.10.87**

(51) Int. Cl.⁵: **C08L 69/00**, C08L 25/06,
//(C08L69/00,25:06),(C08L25/06,
69:00)

Die Akte enthält technische Angaben, die nach dem Eingang der Anmeldung eingereicht wurden und die nicht in dieser Patentschrift enthalten sind.

(54) **Thermoplastische Mischungen aus aromatischen Polycarbonaten und Polystyrolen und ihre Verwendung als Substrate für optische Datenspeicher.**

(30) Priorität: **22.10.86 DE 3635825**

(43) Veröffentlichungstag der Anmeldung:
**27.04.88 Patentblatt 88/17**

(45) Bekanntmachung des Hinweises auf die
Patenterteilung:
**10.04.91 Patentblatt 91/15**

(84) Benannte Vertragsstaaten:
**DE FR GB IT NL**

(56) Entgegenhaltungen:
**EP-A-19 982 4**
**WO-A-84/04317**
**DE-A- 2 329 585**
**DE-A- 2 842 005**

**PATENT ABSTRACTS OF JAPAN, Band 7, Nr. 201 (C-184)[1346], 6. September 1983; & JP-A-58 101 112 (IDEMITSU KOSAN K.K.) 16-06-1983**

(73) Patentinhaber: **BAYER AG**

**W-5090 Leverkusen 1 Bayerwerk(DE)**

(72) Erfinder: **Wehnert, Wolfgang, Dr.**
**Bodelschwinghstrasse 14**
**W-4150 Krefeld 1(DE)**
Erfinder: **Grigo, Ulrich, Dr.**
**Michelsheide 9**
**W-4152 Kempen 3(DE)**
Erfinder: **Schmid, Helmut, Dr.**
**Wedelstrasse 69**
**W-4150 Krefeld(DE)**
Erfinder: **Wagner, Joachim, Dr.**
**Semmelweis-Strasse 135**
**W-5000 Koeln 80(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

JOURNAL OF APPLIED POLYMER SCIENCE, Band 26 Nr. 2, Februar 1981, Seiten 499-508, John Wiley & Sons, Inc., New York, US; Y.S. LIPATOV et al.: "Viscoelastic properties of polystyrene - polycarbonate blends in melt"

J. Henning, Vortrag der Tagung "Neue polymere" Bad Nauheim, 14./15.04 86 " Polymere als Substrate für opt. Plattenspeicher".

Nikkei Sangyo-Industry Daily, 07.02. 86 "Simitomo Chemical Developed New Resin for Erasable Optical Disc"

Patent Abstracts of Japan, Vol. 10, No 166, Sect. C, 1986; & JP-A-61 19 656

**Beschreibung**

Gegenstand der vorliegenden Erfindung sind Mischungen aus

A) 90 bis 20 Gew.-%, vorzugsweise 80 bis 45 Gew.-% und insbesondere 70 bis 50 Gew.-% eines aromatischen Polycarbonats mit einem $\overline{M}$ w (Gewichtsmittelmolekulargewicht, ermittelt durch Gelpermeationschromatographie) von 15.000 bis 25.000 un p-(Iso-$C_8$-$C_9$-alkyl)-phenyl-Endgruppen auf Basis folgender Dipenole oder deren Mischungen:

Hydrochinon,

Resorcin,

Dihydroxydiphenylen,

Bis-(hydroxyphenyl)-alkane,

Bis-(hydroxyphenyl)-cycloalkane,

Bis-(hydroxyphenyl)-sulfide,

Bis-(hydroxyphenyl)-ether,

Bis-(hydroxyphenyl)-ketone,

Bis-(hydroxyphenyl)-sulfoxide,

Bis-(hydroxyphenyl)-sulfone,

$\alpha,\alpha'$-Bis-(hydroxyphenyl)-diisopropylbenzole

sowie deren kernhalogenierte Verbindungen,

und

B) 10 bis 80 Gew.-%, vorzugsweise 20 bis 55 Gew.-% und insbesondere 30 bis 50 Gew.-% eines Polystyrols, mit einem $\overline{M}$ w (Gewichtsmittelmolekulargewicht, ermittelt über relative Lösungsviskosität in DMF bei C = 5 g/l und 20°C) von 80.000 bis 400.000.

Die erfindungsgemäßen Mischungen sind aufgrund ihre niedrigen Doppelbrechung als Substrate für optische Datenspeicher geeignet, da solche Mischungen sich zur Herstellung von Formkörpern mit besonders niedriger Doppelbrechung in tangentialer und radialer Richtung zur Plattenfläche eignen.

Gegenstand der vorliegenden Erfindung ist somit auch die Verwendung der erfindungsgemäßen Mischungen als Substrate für optische Datenspeicher.

Die Information optischer Datenträger wird mit dem linear polarisierten Licht eines Lasers gelesen und im Falle beschreibbarer Datenspeicher auch eingeschrieben. Eines der Systeme für beschreib- und löschbare Verfahren sind die magnetooptischen Datenspeicher: Hier muß besonderer Wert auf doppelbrechungsfreies Substratmaterial gelegt werden, da eine geringfügige Drehung (unter 1°) der Licht-Schwingungsebene schon als Signal gelesen wird.

Doppelbrechung setzt sich in Kunststoffen (Thermoplasten) im wesentlichen aus 2 Faktoren zusammen: Einer materialspezifischen Komponente einerseits und einem verarbeitungsbedingten Anteil, der auch als Orientierungsdoppelbrechung bezeichnet wird, andererseits. Doppelbrechungsarme, thermoplastische Formteile können somit durch zweierlei Maßnahmen hergestellt werden, entweder durch die Wahl geeigneter Verarbeitungsparameter, beispielsweise durch Verarbeitung von niedrigviskosen Typen bei relativ hoher Temperatur wie etwa beim Spritzgießen oder Spritzprägen von Audio-Compact-Discs aus thermoplastischem Polycarbonat, oder durch den Einsatz von Material, das von sich aus nur geringe Neigung zur Doppelbrechung zeigt, wie beispielsweise Polymethylmethacrylate, welche für die Herstellung von Video-Discs verwendet werden.

Beschreibbare Speicherverfahren wie z. B. magnetooptische Systeme erfordern beim Beschreiben eine relativ hohe Energie, um ein akzeptables Signal/Rausch-Verhältnis zu bekommen. Dazu wird eine Optik mit großer numerischer Apertur verwendet. Durch den Öffnungswinkel der Schreib- und Leseoptik bedingt, bekommt eine möglichst geringe optische Anisotropie auch für den Strahlenverlauf in tangentialer und radialer Richtung erhebliche Bedeutung. So zeigen Compact Discs, die in achsialer Richtung bereits sehr niedrige Gangunterschiede der Doppelbrechung (unter 10 nm/mm) aufweisen, tangential und radial noch hohe Meßwerte, typischerweise um 500 - 1.000 nm/mm.

Mischungen aus Polycarbonaten und Polystyrolen sind bekannt (siehe DE-AS 1 109 884). Die dort beschriebenen Polycarbonate haben jedoch keine p-Isoalkylphenyl-Endgruppen. Über die optische Verwendung der Gemische ist in der DE-AS 1 109 884 nichts erwähnt.

Aus der DE-OS 33 47 684 (Le A 22 595) ist ein Verfahren bekannt, die Doppelbrechung von Kunststoffolien durch eine spezielle Oberflächenbehandlung stark zu reduzieren oder sogar zu eliminieren. Als Kunststoffe sind Polystyrol, Polyvinylchlorid, Polyacrylsäureester und Polyester, insbesondere Polycarbonat, genannt. Die Folien sollen Formstabilität, Wasserdampfdurchlässigkeit, Kratzfestigkeit und Temperaturunempfindlichkeit aufweisen, sich leicht verformen lassen und chemisch gegen die Einwirkung vielfältiger Hilfschemikalien beständig sein. (Seite 6 der DE-OS 33 47 684.)

Aus der DE-OS 34 15 104 (Le A 23 047) sind optisch einachsige Kunststoffolien bekannt, die mit einem Polyacrylatlack beschichtet sind, wodurch die Wasserdampfdurchlässigkeit vermindert und die Chemikalienfestigkeit verbessert wird (Seite 8, Absatz 5 der DE-OS). Als Kunststoffe sind u. a. Polystyrol, Styrol-Acrylnitril-Mischpolymerisate, Polycarbonat, Polyacrylsäureester, Polymethacrylsäureester, Celluloseester oder Mischungen von Copolymerisaten, welche die genannten Polymeren enthalten (Seite 8, letzter Absatz der DE-OS), genannt. Ganz besonders bevorzugt sind Polycarbonat oder Mischungen von Kunststoffen, die mindestens 10 Gew.-% Polycarbonat enthalten (Seite 9, Absatz 1 der DE-OS 34 15 104). Geeignet sind auch Mischungen von Polymeren, die optisch durchsichtige Kunststoffe liefern. Der Vorteil dieser Mischungen ist eine Verbesserung der mechanischen, insbesondere aber der chemischen Eigenschaften, vor allem der Widerstandsfähigkeit des Kunststoffs gegen die Bestandteile der flüssigkristallinen Phase bei erhöhten Temperaturen. Bevorzugt sind Mischungen mit Siliconen oder Polyestern (DE-OS 34 15 104, Seiten 12/13).

Die in der DE-OS 3 415 104 beschriebenen Polycarbonate haben Gewichtsmittelmolekulargewichte $\overline{M}$ w zwischen 10.000 und 100.000, vorzugsweise zwischen 20.000 und 40.000, und für Gußmaterial vorzugsweise 75 000 bis 110 000 (Seite 10, Absatz 1 der DE-OS 3 415 104). Für die dort beschriebenen Polycarbonate sind als Kettenabbrecher keine p-(Iso-$C_8$-$C_9$-alkyl)-phenole genannt.

Aus der DE-OS 33 27 929 (Le A 22 015) sind doppelbrechungsfreie Kunststoffe bekannt, die diese Eigenschaft dadurch erreichen, daß mindestens zwei flächige Gebilde aus Kunststoff mit je einer optischen Achse senkrecht zur Flächennormalen unter einem Winkel von 90° parallel hintereinander angeordnet sind und daß die Summe der Gangunterschiede überall nahezu Null ist. Vorzugsweise werden Folien so miteinander kombiniert, daß eine Kompensation der Doppelbrechung eintritt (Seite 6 der DE-OS, Absätze 2 und 3).

Geeignete Kunststoffe sind z. B. Polyarylsulfon, Polystyrol, Polyvinylchlorid oder Polyurethan. Vorzugsweise verwendet man Polymerisate, die gute optische Qualitäten haben, wie Styrol-Acrylnitril-Mischpolymerisate, Polymethylpenten, Polycarbonat, Polyacrylsäureester, Polymethacrylsäureester, Celluloseester oder Mischungen und Copolymerisate, welche die genannten Polymere enthalten. Ganz besonders bevorzugt werden Polycarbonat oder Mischungen von Kunststoffen, die mindestens 10 Gew.-% Polycarbonat enthalten, eingesetzt.

Die in der DE-OS 33 27 929 beschriebenen Polycarbonate haben Gewichtsmittelmolekulargewichte $\overline{M}$ w zwischen 10.000 und 100.000, vorzugsweise zwischen 20.000 und 40.000, und für Gußmaterial vorzugsweise 75 000 bis 110 000 (Seite 12, Absatz 3 der DE-OS 33 27 929). p-(Iso-$C_8$-$C_9$-alkyl)-phenole sind auch hier nicht als Kettenabbrecher genannt.

Die doppelbrechungsfreien Kunststoffe gemäß DE-OS 33 27 929 müssen neben ausreichenden mechanischen Eigenschaften sich kontinuierlich und flexibel zu allen geforderten Formen verarbeiten lassen und müssen chemisch gegen die Einwirkung vielfältiger Hilfschemikalien beständig sein (DE-OS 33 27 929, Seiten 5/6). Die doppelbrechungsfreien Kunststoffe können noch beschichtet sein (DE-OS, Seite 9).

Geeignet sind die doppelbrechungsfreien Kunststoffe überall dort, wo beispielsweise Laserlichtquelle, Polarisationsfilter, Monolayers, dichroitische Farbstoffe oder doppelte Schichtlagen gebraucht werden (DE-OS 33 27 929, Seiten 15/16).

Bekannt ist auch die allgemeine Möglichkeit, die Doppelbrechung eines Polymeren zu verringern, indem man ein Polymeres mit entgegengesetzter Doppelbrechung hinzufügt (J. Hennig, Vortrag auf der Tagung "Neue Polymere" in Bad Nauheim, 14./15. 04. 1986: "Polymere als Substrate für optische Plattenspeicher").

Bekannt ist auch die prinzipielle Möglichkeit, durch Kombination von Polycarbonat und modifiziertem Polystyrol ein Material geringer Doppelbrechung zu erhalten (Nikkei Sangyo-Industry Daily vom 07.02.1986 "Sumitomo Chemical Developed New Resin for Erasable Optical Disc").

Bekannt ist auch, doppelbrechungsarme Kunststoffsysteme dadurch herzustellen, daß man die beiden Polymeren mit entgegengesetzter Doppelbrechung durch eine dritte Komponente in ihrer Verträglichkeit verbessert (siehe EP-OS 01 99 824).

Die Verwendung der üblichen Polycarbonate mit Phenylbzw. p-tert.-Butylphenyl-Endgruppen in Kombination mit nicht modifiziertem Polystyrol führt dagen wegen der bekannten Unverträglichkeit beider Systeme bei der Spritzgußverarbeitung zu Spritzgußkörpern, die starke Trübung und deutliche Delaminierungstendenzen aufweisen. (Siehe dazu auch japanische Offenlegungsschrift Sho 61-19656, Vergleichsbeispiel 3.)

Erst der Einsatz von Polycarbonat mit p-(Iso-$C_8$-$C_9$-alkyl)-phenylendgruppen (Mw = 15.000 - 25.000), wie in der DE-oS 2 842 005 (Le A 19 006) beschrieben, sorgt für eine Verringerung der Unverträglichkeit mit Polystyrol. Dieser Effekt macht sich bei Spritzgußkörpern aus diesen speziellen Blends in einer gegenüber üblichen Blends deutlich geringeren Trübung und Delaminierungstendenz bemerkbar,

Erfindungsgemäß geeignete aromatische Polycarbonate mit $\overline{M}$ w von 15.000 bis 25.000 mit p-(Iso-$C_8$-

4

EP 0 264 792 B1

C$_9$-alkyl)-phenyl-Endgruppen sind in der DE-OS 28 42 005 (Le A 19 006) beschrieben.

Es sind Polycarbonate auf Basis der Diphenole der Formel I

HO-Z-OH

worin Z ein zweiwertiger aromatischer Rest mit vorzugsweise 6 bis 30 C-Atomen ist, ausgewählt aus

Hydrochinon,

Resorcin,

Dihydroxydiphenylen,

Bis-(hydroxyphenyl)-alkanen,

Bis-(hydroxyphenyl)-cycloalkanen,

Bis-(hydroxyphenyl)-sulfiden,

Bis-(hydroxyphenyl)-ethern,

Bis-(hydroxyphenyl)-ketonen,

Bis-(hydroxyphenyl)-sulfoxiden,

Bis-(hydroxyphenyl)-sulfonen,

$\alpha,\alpha'$-Bis-(hydroxyphenyl)-diisopropylbenzolen

sowie deren kernhalogenierten Verbindungen,

wobei die Polycarbonate noch durch 0,05 bis 2 Mol-%, bezogen auf Mole eingesetzte Diphenole, drei- oder mehr als dreifunktionelle Verbindungen verzweigt sein können.

Die Menge an p-(Iso-C$_8$-C$_9$-alkyl)-phenol-Kettenabbrecher berechnet sich in bekannter Weise aus dem zu erzielenden Molekulargewicht des Polycarbonats und dem vorgesehenen Verzweigungsgrad und liegt etwa zwischen 4 Mol-%, und 9 Mol-%, bezogen jeweils auf Mole eingesetzte Diphenole.

Bevorzugte Diphenole sind z.B.:

4,4'-Dihydroxydiphenyl,

2,2-Bis-(4-hydroxyphenyl)-propan,

2,4-Bis-(4-hydroxyphenyl)-2-methylbutan,

1,1-Bis-(4-hydroxyphenyl)-cyclohexan

$\alpha,\alpha'$-Bis-(4-hydroxyphenyl)-p-diisopropylbenzol,

2,2-Bis-(3-chlor-4-hydroxyphenyl)-propan,

2,2-Bis-(3,5-dichlor-4-hydroxyphenyl)-propan,

2,2-Bis-(3,5-dibrom-4-hydroxyphenyl)-propan.

Besonders bevorzugte Diphenole sind z.B.:

2,2-Bis-(4-hydroxyphenyl)-propan,

2,2-Bis-(3,5-dichlor-4-hydroxyphenyl)-propan,

2,2-Bis-(3,5-dibrom-4-hydroxyphenyl)-propan,

1,1-Bis-(4-hydroxyphenyl)-cyclohexan.

Es können auch beliebige Mischungen der vorgenannten Diphenole verwendet werden.

Geeignete drei- oder mehr als dreifunktionelle Verbindungen sind insbesondere solche mit drei oder mehr als drei phenolischen OH-Gruppen. Als Beispiele seien aufgeführt: Phloroglucin, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, Hexa-(4-(4-hydroxyphenyl-isopropyl)-phenyl)-ortho-terephthalsäureester, Tetra-(4-hydroxyphenyl-isopropyl)-phenoxy)-methan und 1,4-Bis-((4',4''-dihydroxy-triphenyl)-methyl)-benzol. Einige der sonstigen dreifunktionellen Verbindungen sind 2,4-Dihydroxybenzoesäure, Trimesinsäure, Cyanurchlorid und 3,3-Bis-(4-methyl-4-hydroxyphenyl)-2-oxo-2,4-dihydroindol.

Die Herstellung der erfindungsgemäß geeigneten Polycarbonate erfolgt vorzugsweise nach dem Phasengrenzflächenverfahren (vgl. H. Schnell, "Chemistry and Physics of Polycarbonates", Polymer Reviews, Vol. IX, Seite 33 ff., Interscience Publ., (1964)) in bekannter Weise.

Erfindungsgemäß geeignete Polystyrole sind Homopolymerisate des Styrols, die zum Beispiel durch Suspensionspolymerisation in Gegenwart von Katalysatoren aus dem Monomer mit einem $M_w$ von 80.000 bis 400.000, vorzugsweise von 170.000 bis 300.000 (gemessen in DMF bei C = 5 g/l und 20$^\circ$ C) erhalten werden.

Die Herstellung der erfindungsgemäßen Mischungen kann beispielsweise durch Compoundierung bei der Extrusion, die Verarbeitung der Mischungen zu Formkörpern, beziehungsweise zu Datenspeichern erfolgt beispielsweise durch Spritzguß.

Die Verwendung der erfindungsgemäßen Mischungen als Substrate für optische Datenspeicher kann wie folgt erläutert werden:

"Substrat" für optische Datenspeicher im erfindungsgemäßen Sinne ist das Material der mechanischen Grundlage einer Datenplatte, das sowohl als Träger für eine Informationsschicht bzw. - ebene dient als auch

5

den Abstandshalter zwischen dieser Informationstragenden und der äußeren -ebenen- Plattenoberfläche darstellt.

Der informationstragende Lichtstrahl muß sowohl zum Lesen als auch zum Schreiben unverändert das Substrat durchlaufen - auf dem Weg von der ebenen Plattenoberfläche zur gegenüberliegenden Datenseite ebenso wie - im Falle des Lesestrahls - nach Informationsübertragung von dieser wieder zur äußeren Oberfläche zurück, aus der er zum Detektor hin austritt.

Beispiele für optische Datenspeicher sind beispielsweise Audio-Compact-Disc und die Video-Disc.

Beispiele

1. Gemischt wurden wechselnde Anteile Polycarbonat, hergestellt gemäß DE-OS 28 42 005 durch Reaktion von Bisphenol A mit Phosgen in Methylenchlorid in Gegenwart von Natronlauge als Säureakzeptor und 4-(1,1,3,3-Tetramethyl-butyl)phenol als Kettenabbrecher, mit einer relativen Lösungsviskosität $\eta$ rel 1,20 (gemassen in Methylenchlorid bei 5 g/l bei 25° C) = Mw von 18.500 und Styrol Mw von 250.000 (Tab. 1), durch Compoundierung an einer ZSK 32 bei 270-290° C.

Die erhaltenen Compounds wurde an einer Arburg 170 Minispritzgußmaschine zu Flachstäben 80 x 12,7 x 1,6mm verspritzt bei einer Massetemperatur von 280° C. Die Doppelbrechung der Mischungen wurden beurteilt durch Messung der Gangunterschiede in der Mitte der Flachstäbe durch Verwendung eines üblichen Komparators mittels eines Polarisationsmikroskops.

2. Gemischt wurden wechselnde Anteile Polycarbonat, hergestellt wie in Beispiel 1, und Polystyrol, wie in Beispiel 1 angegeben (Tab. 1).

3. Aus der 1:1 Mischung aus Beispiel 1 wurden Compact Discs bei einer Massetemperatur von 340° C spritzgegossen. In Abhängigkeit von den Raumrichtungen wurde die Doppelbrechung in der Mitte zwischen Plattenachse und -rand bestimmt (Tab. 2).

Die Ergebnisse aus den Tabellen 1 und 2 veranschaulichen, daß aus Abmischungen des stark positiv doppelbrechenden, niedrigviskosen und gut fließfähigen Polycarbonats mit verschiedenen, sehr stark negativ doppelbrechenden Polystyrolen (Beispiele 1 und 2) die Herstellung fast doppelbrechungsfreier Formteile möglich ist, die insbesondere auch in tangentialer und radialer Richtung (parallel zur Plattenfläche) überraschend gute Werte zeigen.

Tabelle 1 : Doppelbrechung von Polycarbonat/Polystyrol-Abmischungen

Messung des Gangunterschieds in Stabmittel im Durchlicht (senkrecht zur Stabfläche) am Flachstab 80 x 12,7 x 1,6 mm.

| PS-Gehalt | Gangunterschiede in nm . mm$^{-1}$ | |
|---|---|---|
| % | Beispiel 1 | Beispiel 2 |
| 0 | 180 | |
| 20 | 160 | |
| 30 | 130 | 120 |
| 40 | 105 | 50 |
| 45 | 45 | 40 |
| 50 | 30 | 15 |
| 55 | - 30 | - 40 |
| 60 | - 275 | - 180 |
| 70 | - 430 | - 340 |
| 80 | - 560 | |
| 100 | - 770 | |

Tabelle 2 : Doppelbrechung einer Compact Disc (120 mm ⌀) aus Polycarbonat/Polystyrol-Blend (Beispiel 3).

Messung des Gangunterschieds i. d. Mitte zwischen Plattenachse und -rand im Durchlicht (achsial) sowie an Querschnitten tangential und radial.

| Substratzu-zusammensetzung | Gangunterschiede in nm . $\mathrm{mm}^{-1}$ | | |
| --- | --- | --- | --- |
| | Durchlicht (achsial) | tangential | radial |
| PC/PS 1:1 | - 4 | 61 | - 70 |
| PC (100 %) zum Vergleich | 5 | 540 | 580 |

**Ansprüche**

1. Thermoplastische Mischungen aus
   A) 90 bis 20 Gew.-% eines aromatischen Polycarbonats mit einem $\overline{M}$ w von 15.000 bis 25.000 und p-(Iso-C$_8$-C$_9$-alkyl)-Phenyl-Endgruppen auf Basis folgender Diphenole oder deren Mischungen:
   Hydrochinon,
   Resorcin,
   Dihydroxydiphenylen,
   Bis-(hydroxyphenyl)-alkane,
   Bis-(hydroxyphenyl)-cycloalkane,
   Bis-(hydroxyphenyl)-sulfide,
   Bis-(hydroxyphenyl)-ether,
   Bis-(hydroxyphenyl)-ketone,
   Bis-(hydroxyphenyl)-sulfoxide,
   Bis-(hydroxyphenyl)-sulfone,
   $\alpha,\alpha'$-Bis-(hydroxyphenyl)-diisopropylbenzole
   sowie deren kernhalogenierte Verbindungen,
   und
   B) 10 bis 80 Gew.-% eines Polystyrols mit einem $\overline{M}$ w von 80.000 bis 400.000.

2. Mischung gemäß Anspruch 1 aus 80 bis 45 Gew.-% der Komponente A) und 20 bis 55 Gew.-% der Komponente B).

3. Mischungen gemäß Anspruch 1 aus 70 bis 50 Gew.-% der Komponente A) und 30 bis 50 Gew.-% der Komponente B).

4. Verwendung dar Mischungen der Ansprüche 1 bis 3 als Substrate für optische Datenspeicher.

**Claims**

1. Thermoplastic blends of
   A) 90 to 20% by weight of a p-(iso-C$_{8-9}$-alkyl)-phenyl-terminated aromatic polycarbonate having an $\overline{M}$ w of 15,000 to 25,000 based on the following diphenols or mixtures thereof: hydroguinone, resorcinol, dihydroxydiphenylene, bis-(hydroxyphenyl)-alkanes, bis-(hydroxyphenyl)-cycloalkanes, bis-(hydroxyphenyl)-sulfides, bis-(hydroxyphenyl)-ethers, bis-(hydroxyphenyl)-ketones, bis-(hydroxyphenyl)-sulfoxides, bis-(hydroxyphenyl)-sulfones, $\alpha,\alpha'$-bis-(hydroxyphenyl)-diisopropylbenzenes and nucleus-halogenated compounds thereof, and

B) 10 to 80% by weight of a polystyrene having an $\overline{M}$ w of 80,000 to 400,000.

2. A blend as claimed in claim 1 of 80 to 45% by weight of component A) and 20 to 55% by weight of component B).

3. Blends as claimed in claim 1 of 70 to 50% by weight component A) and 30 to 50% by weight component B).

4. The use of the mixtures claimed in claims 1 to 3 as substrates for optical data storage media.

## Revendications

1. Mélanges thermoplastiques de :

A) 90 à 20 % en poids d'un polycarbonate aromatique ayant une valeur de $\overline{M}$ w de 15 000 à 25 000 et portant des groupes terminaux p-(isoalkyle en $C_8$-$C_9$)-phényle, à base des diphénols suivants ou de leurs mélanges :

l'hydroquinone,

le résorcinol,

les dihydroxydiphényles,

les bis-(hydroxyphényl)-alcanes,

les bis-(hydroxyphényl)-cycloalcanes,

les sulfures de bis-(hydroxyphényle),

les éthers bis(hydroxyphényliques),

les bis-(hydroxyphényl)-cétones,

les bis-(hydroxyphényl)-sulfoxydes,

les bis-(hydroxyphényl)-sulfones,

les ,$\alpha,\alpha'$-bis(hydroxyphényl)diisopropylbenzènes,

et leurs dérivés halogénés dans les noyaux, et

B) 10 à 80 % en poids d'un polystyrène ayant une valeur de $\overline{Mw}$ de 80 000 à 400 000.

2. Mélange selon la revendication 1, consistant en 80 à 45 % en poids du composant A) et 20 à 55 % en poids du composant B).

3. Mélange selon la revendication 1, consistant en 70 à 50 % en poids du composant A) et 30 à 50 % en poids du composant B).

4. Utilisation des mélanges des revendications 1 à 3 en tant que supports pour des enregistreurs optiques de données.